# EUROPEAN PATENT SPECIFICATION

(11) **EP 0 502 567 B1**
(45) Date of publication and mention of the grant of the patent: **03.05.1995**
(21) Application number: 92200491.6
(22) Date of filing: 20.02.1992
(51) Int. Cl.: E05F 15/20, E06B 9/68

(54) **Remote control system for controlling a function of a base station**
Fernbetätigungssystem zum Regeln einer Funktion einer Basisstation
Système à télécommande pour commander une fonction de base

(30) Priority: 06.03.1991 US 665048
(43) Date of publication of application: 09.09.1992
(73) Proprietor: DELCO ELECTRONICS CORPORATION, Kokomo Indiana 46902 (US)
(72) Inventor: Gidwani, Sachal Bhagwan, Carmel, Indiana 46032 (US)
(74) Representative: Denton, Michael John

(56) References cited:
- AU-D- 7 094 587
- DE-A- 3 333 041
- DE-A- 3 625 555
- DE-A- 3 830 555
- DE-A- 3 915 569
- DE-A- 3 932 086
- DE-B- 2 325 939

## Description

This invention relates to a system for controlling a function of a base station by remote control and to an electronic key therefor.

It is known to open or unlock the door of a vehicle or perform another function by operation of a miniature remote unit or electronic key which is generally carried by the vehicle operator. By pressing a button on the remote unit a coded radio signal is transmitted to a base unit on the vehicle and, if it recognizes the code as an authorized code, the base unit unlocks the door or performs another predetermined function. It is recognized that such systems are not limited to controlling vehicle functions but can also be used to control garage doors, security gates, or home entry, for example.

DE-A-3 625 555 discloses one such system in which a base unit associated with a garage door operation mechanism includes a receiver for receiving signals from any one of a plurality of differently-coded electronic keys and a memory store in which authorisable codes are stored. Such a system operates on the basis of active control only i.e. a user is required to activate the electronic key.

It is desirable to avoid handling the electronic key and pushing the button to activate the unit since it is sometimes inconvenient to do so. To carry out a passive control which does not require a button or the like to be actuated, it has been proposed to provide a system in which the mere presence of the electronic key in the immediate vicinity of the base station is sufficient to activate the base station function. In conjunction with the presence of the electronic key, it is generally preferred to require a positive act, such as pulling on the door handle, to actuate the system. To avoid key operation when it is beyond the desired bounds of operation, it is further preferred that the system be non-responsive when the key is outside a prescribed range.

While the passive electronic key has obvious advantages, it also has the disadvantage of requiring close proximity to or even touching the vehicle or other base station. An active key typically requires manipulation by the operator which may not be convenient.

The present invention seeks to provide an improved system for controlling a function of a base station by remote control and an electronic key therefor.

According to an aspect of the present invention, there is provided a system for controlling a function of a base station by remote control as specified and characterised in claim 1.

According to another aspect of the present invention, there is provided an electronic key as specified and characterised in claim 8.

The invention can provide an electronic key which has both passive and active characteristics to given the operator the choice of either mode of operation. Thus, the operator could open the vehicle door without touching the key or he could unlock the door from a remote location. The active mode is particularly useful for other functions such as opening a garage door or turning on the lights either in the home or in the vehicle.

Furthermore, it is possible with this electronic key to incorporate other data, in the memory thereof, relating to the base station or to the user and which may be loaded by one base station and retrieved by the same or another base station for display or other use.

In an embodiment there is provided a system for actively and passively controlling a function at a base station by remote control comprising a base station having a receiver, a transmitter and means for requesting access authorization by a transmitted coded signal; an electronic key having a receiver and a transmitter linked to the base station, an intelligence circuit including a memory for generating access authorization signals for transmission to the base station in response to certain coded signals, whereby base station access is granted by passive operation of the key; and the electronic key further including actuation means coupled to the intelligence circuit for initiating the generation of access signals for transmission to the base station, whereby base station access is granted by active operation of the key.

An embodiment of the present invention is described below, by way of illustration only, with reference to the accompanying drawings, in which:
Figure 1 is a diagram of an embodiment of system of base units and a remote unit;
Figure 2 is a block diagram of a base unit of the system of Figure 1;
Figure 3 is a block diagram of a remote unit of the system of Figure 1; and
Figure 4 is a chart of an embodiment of functions and signal exchanges for the base and remote units for vehicle access.

The ensuing description is directed to an embodiment of system specifically designed for both active and passive secure remote access to a plurality of vehicles via a radio frequency link and for active control of a non-vehicular station such as a garage door. In particular, the embodiment is described as a vehicle access system which is passively activated to unlock a door when the door handle is pulled or otherwise actuated and which is further activated by actuating a push-button on the electronic key to unlock a vehicle door or to open a garage door. The system also provides access to vehicle or user data by a vehicular or non-vehicular station.

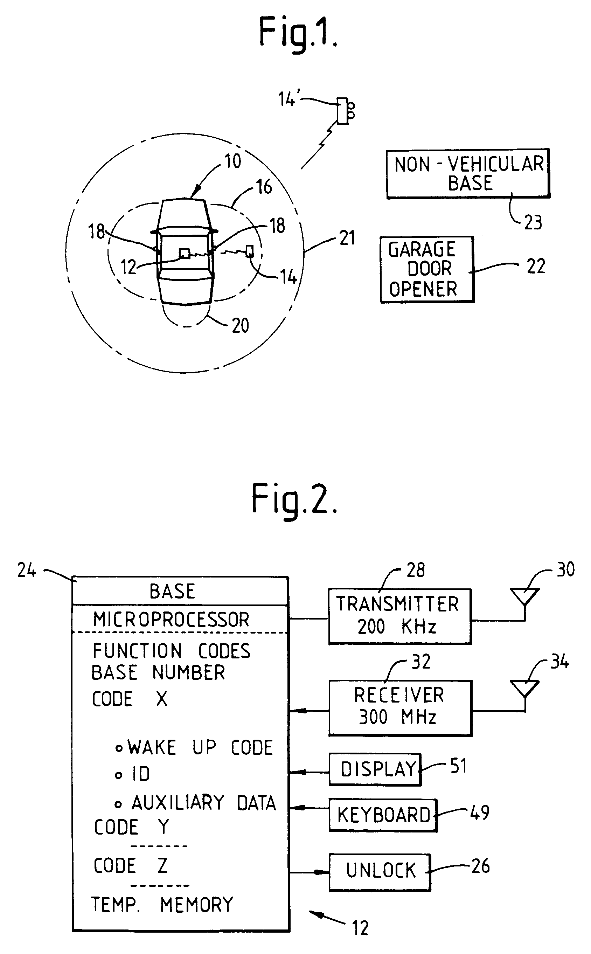

Figure 1 shows a base station or vehicle 10 equipped with a remote access system including a base unit 12 in the vehicle and a portable remote unit 14 typically carried in the vehicle operator's pocket or purse. The units are coupled by radio communication effective over a short distance. As indicated by dotted lines 16 adjacent each vehicle door handle 18 and lines 20 adjacent the vehicle boot, minimum distances of only a metre or two are required although a larger radius of communication up to line 21 may be provided. Suitable radii may be 1.5 metres (five feet) from the door handles for lines 16, 4.5 metres (fifteen feet) for line 21, 60 centimetres (two feet) from the boot lock for line 20, and about 1.2 metres (four feet) for line 21 in the boot region. For security reasons, granting access by passive remote units 14 beyond the boundary 21 is prohibited; otherwise anyone might gain access if a distant electronic key could be activated by a base unit. It is intended that when the operator carries the remote unit within radio range of the base unit, the system will automatically act to unlock the door without activation by the operator, provided that the identification of the remote unit can be verified. In some applications the units are activated only when the operator touches or tries to operate the door handle 18. Since more than one operator may use one or more of the same vehicles, there are other remote units, not shown, which may be programmed for vehicle access.

The remote unit shown as unit 14' outside the boundary 21 is operative in the active mode since the security depends on the possession and manual actuation of the unit. Thus a greater operating range is afforded in the active mode. This is particularly useful for actuating a garage door opener 22 which is suitably actuated from a distance while the vehicle is still approaching the garage.

In addition to the garage door opener 22, other non-vehicular base units 23 are provided. This allows a variety of functions to take place such as the loading or retrieving of auxiliary data to or from remote units as further described below. Data carried by the electronic key can be down-loaded to a base station where it is displayed or processed.

The base unit 12, shown in Figure 2, has a microprocessor based controller 24, at least one "unlock" or other function output circuit 26, a low frequency radio transmitter 28 and antenna 30 operating at 200 kHz to generate a short range magnetic field, and a very high frequency receiver 32 and antenna 34 operating at 300 MHz. The controller 24 stores several codes including a base number which is unique to the vehicle, and codes X, Y, and Z which relate to respective remote units 14 and others, not shown. Code X contains two components, a wakeup code, and an identification code (ID) which are specific to the remote unit 14. The controller also stores a set of function codes which are common to all the remote units. Each function code, when transmitted, determines the operation to be performed in the remote unit, e.g., read out the ID or update the ID.

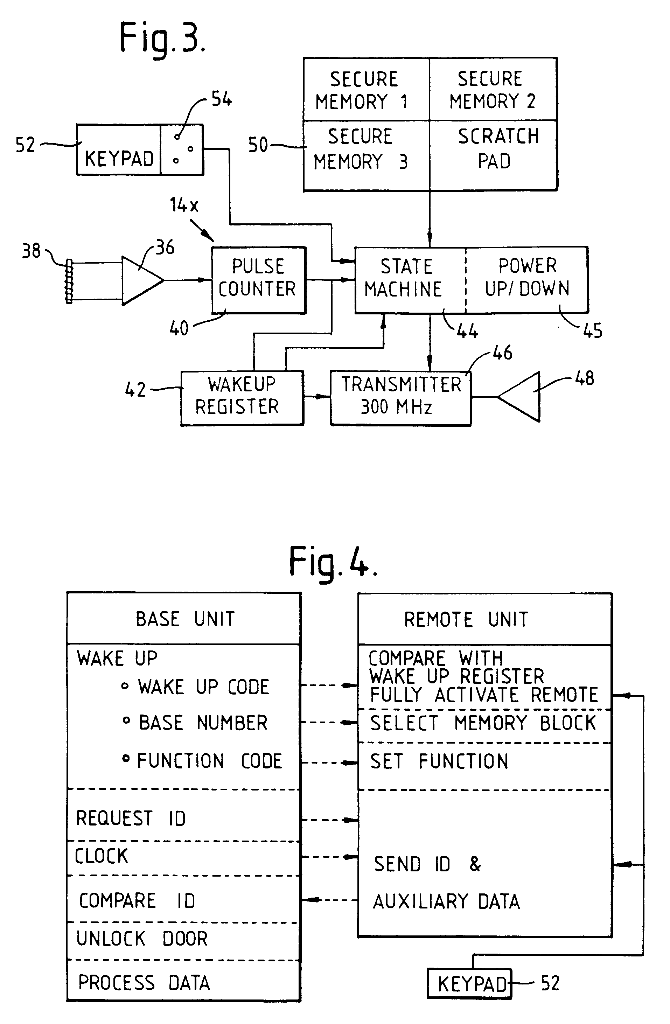

The remote unit, shown in Figure 3, includes a 200 kHz receiver 36 and antenna 38 coupled thereto for receiving signals from the base unit 12. The antenna 38 is preferably a ferrite antenna which is capable of producing at least 3 mV signals when in the range of the base unit 12, and the receiver 36 includes a comparator having its input terminals coupled across the antenna and which produces a 3 V output pulse when each 3 mV signal pulse is received. The LF signal is modulated by bursts of various length and the number of cycles in each burst is counted by a pulse counter 40 connected to the output of the receiver 36 and translates the various bursts into digital symbols A, B, C, etc. Symbols A and B comprise digital bits 0 and 1, respectively, while the other symbols are codes of several digits. The counter output is coupled to a wakeup register 42 and to a state machine 44 which comprises a logic circuit or intelligence circuit. The wakeup register 42 is also connected to the state machine 44 and may even be a part of the state machine. Both the wakeup register 42 and the state machine 44 have outputs connected to a VHF transmitter 46 operating at 300 MHz and which is coupled to an antenna 48 for transmitting to the base unit 12. The state machine 44 incorporates a power conservation function 45 which powers down the state machine to a low current level to deactivate most of the state machine and the transmitter 46 while the unit is "asleep", leaving just enough circuitry active to receive and process a wakeup signal. When a wakeup signal bearing the correct wakeup code is received, the rest of the system is powered up for full operation.

The state machine 44 is also connected to a memory 50 which is partitioned into several memory blocks, here shown as four blocks including three secure memory blocks, one corresponding to each base unit, and a scratch pad or temporary memory block. When the system is initially programmed, the state machine 44 determines which memory block is assigned to each vehicle or other base station and pointers are stored in the state machine to identify the correct memory address for each base number. Secure memory 1 is assigned to vehicle 10, secure memory 2 is assigned to another vehicle, etc. Thus the transmitted base number ultimately determines which memory block is accessed. Each secure memory block contains the ID and auxiliary data which is stored in the corresponding base unit.

Each secure memory block stores auxiliary data which might be used for any of several purposes. For example, in a vehicle which has power seats or steering wheel power adjustments with position memories for each vehicle user, the auxiliary data for a given electronic key may be codes for the positions preferred by the user of that key for each vehicle used by the user. Thus the data can be both personal and vehicle (or station) specific. When the ID is retrieved from the key by the base unit, the position data can be retrieved at the same time and the data would be used to position automatically the seat and/or the steering wheel. As a second example of auxiliary data, for a vehicle equipped with a keyboard and a display screen, user appointment calendar data can be entered into the secure memory by transmission from the base unit and subsequently displayed in the same or another similarly equipped vehicle or non-vehicular base unit. Figure 2 shows a keyboard 49 and a display 51 as optional peripheral equipment at the base units 12 or 23, for this implementation of the auxiliary data scheme. A third example of auxiliary data applies to rental car systems. When a vehicle is parked at the rental return lot and turned off, the vehicle mileage and fuel data are loaded into the secure memory. When the electronic key is turned in at the rental office, a base unit 23 there can read the vehicle data and process the data for bill preparation. In general the auxiliary data is paired with the ID for a given remote unit and is installed in or retrieved from the remote unit in the same manner as the ID.

A keypad 52 having actuators or push-button switches 54 is mounted on the housing of the remote unit for manual actuation by the operator. The actuators 54 are connected to the state machine 44 and are each associated with a particular vehicle or other base station. Each button, when actuated, is effective to activate the remote unit and directly cause the ID from a particular memory block to be transmitted at the VHF frequency. This is the active mode. Since the short range LF signal is not used for activation, the remote unit is not limited to that range but instead has the full range of the VHF frequency which is greater than the LF range. As a matter of transmitter and receiver design and the need to conserve battery energy, a modest VHF range is selected, for example 10 metres (30 feet).

The communication between the base unit and the remote unit is shown in Figure 4. In the passive mode, when the operator pulls on the vehicle door handle, the base unit sends a wakeup command and then a request ID command to the unit via the LF radio frequency link. The wakeup command comprises the wakeup code, the base number and a function code. If the remote unit is within the range of the LF signal, it verifies the wakeup code by comparing it with the code stored in the wakeup register 42. If the wakeup codes match, the power function of the state machine 44 fully activates the remote unit to power up the VHF transmitter 46. The remote unit selects the secure memory block that corresponds to the base number and transmits the ID and the auxiliary data in the memory block to the base. The base unit compares the received ID with the ID in its own memory and, if they match, the door is unlocked to allow vehicle entry. Thus the ID is used as an authorization code and a transmission of that code comprises an authorization signal. In the active mode, operation of the push-button corresponding to a given memory block effects activation of the remote unit and transmission of the ID and auxiliary data in the block. If the transmitted ID matches a stored ID in the base unit the door is unlocked. In either mode, the transmitted auxiliary data may be processed in any suitable manner.

Any secure memory block may be updated by furnishing new ID codes and/or auxiliary data. This is desirable for security purposes and may occur, for example, each time the vehicle ignition key is removed. At that time, the wakeup procedure takes place and then a new ID and/or data is generated by the base unit and transmitted to the remote unit which stores it/them in the scratchpad memory. The new ID code is retransmitted back to the base unit to verify that it is correct. If so, the base unit commands that it be entered as the ID for that base by sending the "old" ID to the remote unit. If the remote unit verifies that the ID is correct for that base number, the scratchpad address is adopted as the secure memory block for that base number, and the old memory block is then used as a scratchpad.

## Claims

1. A system for controlling a function of a base station by remote control, comprising a first base station (10) adapted to be enabled by receipt of a predetermined authorisation code and an electronic key (14,14'); wherein the first base station (10) includes a first receiver (32) and means for storing an acceptable authorisation code and the electronic key (14, 14') includes a transmitter (48) for sending an authorisation code to the first base station (10) characterised in that the first base station (10) further includes authorisation means (24) adapted to request the electronic key (14,14') to transmit an authorisation code and a transmitter (28) for transmitting such request, in that the electronic key (14,14') further includes a receiver (38,36) for receiving signals from the first base station (10), a memory (50) for containing authorisation codes effective to control a function at the first base station (10) and processing means (44) adapted to obtain, on receipt of a request from the first base station (10), an authorisation code from the memory for transmission to the first base station (10), and in that on receipt of an authorisation code by the first base station (10), which code is verified as an acceptable authorisation code, the first base station (10) will be enabled by passive actuation of the electronic key (14,14') and in that the electronic key includes a manually operable actuator (54) coupled to said processing means (44) and adapted to generate an authorisation code for transmission to the first base station (10) so that on receipt of such authorization code by the first base station (10), which code is verified as an acceptable authorization code, the first base station (10) will be enabled by active actuation of the electronic key (14,14').

2. A system according to claim 1, characterised in that the transmitter (28) of the first base station (10) is a first transmitter (28) and is adapted to transmit the request for an authorisation code by means of a relatively short range signal, the transmitter (48) of the electronic key (14,14') is a second transmitter (48) and is adapted to transmit an authorisation code by means of a relatively long range signal, whereby the electronic key (14,14') can enable the first base station (10) at a greater distance therefrom when actively actuated than when passively actuated.

3. A system according to claim 2, characterised in that the first transmitter (28) is adapted to transmit the request for an authorisation code by means of a low frequency band signal and the second transmitter (48) is adapted to transmit an authorisation code by means of a signal in the VHF radio frequency band.

4. A system according to any preceding claim, characterised in that there is provided a second base station (22,23) including a function controllable by the electronic key (14,14'), the second base station (22,23) including a third receiver adapted to receive a coded signal for controlling the function of the second base station (22,23), the electronic key (14,14') including second actuation means (52) coupled to the processing means (44) and adapted to generate a coded signal for transmission to the second base station (22,23).

5. A system according to claim 4, characterised in that the first base station is a vehicle (10) and the second base station is the operating means (22) for operating a garage door.

6. A system according to any preceding claim, characterised in that the memory (50) of the electronic key (14,14') includes auxiliary data adapted to be transmitted to the or each base station (10,22,23), the or each base station (10,22,23) being adapted to process the auxiliary data.

7. A system according to any preceding claim, characterised in that the or each base station (10, 22,23) is adapted to produce auxiliary data for transmission to the memory (50) of the electronic key (14,14') for storage thereby.

8. An electronic key for controlling a function of a base station by remote control, including a transmitter (48) for sending an authorisation code to the first base station (10), characterised in that the electronic key (14,14') further includes a memory (50) for containing authorisation codes effective to control a function at a base station (10), processing means (44) adapted to obtain an authorisation code from the memory (50), command means (38,36,52,54) operable in an active mode and/or a passive mode and adapted to supply a command signal to the processing means (44) for causing the processing means (44) to obtain an authorisation code from the memory (50), the command means including a receiver (38) for receiving signals from a base station (10) and adapted in the passive mode to supply a command signal to said processing means (44), a manually operable actuator (52,54) adapted to produce a command signal in the active mode, and a transmitter (48) coupled to the processing means (44) for sending the obtained authorisation code to a base station (10).

9. An electronic key according to claim 8, characterised in that the receiver (38) is adapted to receive magnetic field signals and the transmitter (48) is adapted to transmit the obtained authorisation code at a frequency having a longer range than the magnetic field signals adapted to be received by the receiver (38).

10. An electronic key according to claim 8 or 9, characterised in that the memory (50) contains auxiliary data adapted to be transmitted to the base station (10,22,23) with the authorization code.

11. An electronic key according to claim 8, 9 or 10, characterised in that the electronic key is adapted to receive and to store auxiliary data.

## Patentansprüche

1. Ein System zur Steuerung einer Funktion einer Basisstation durch Fernsteuerung mit einer ersten Basisstation (10), die so ausgebildet ist, daß sie durch Empfang eines vorbestimmten Berechtigungscodes freigegeben wird, und einem elektronischen Schlüssel (14, 14'); worin die erste Basisstation einen ersten Empfänger (32) und Mittel zum Speichern eines akzeptierbaren Berechtigungscodes und der elektronische Schlüssel (14, 14') einen Transmitter (48) zum Senden eines Berechtigungscodes zur ersten Basisstation (10) einschließt,
dadurch **gekennzeichnet**,
daß die erste Basisstation (10) ferner Berechtigungsmittel (24), die so ausgebildet sind, daß sie den elektronischen Schlüssel (14, 14') auffordern, einen Berechtigungscode zu übertragen, und einen Transmitter (28) zum Übertragen einer derartigen Aufforderung einschließt, daß der elektronische Schlüssel (14, 14') ferner einen Empfänger (38, 36) zum Empfangen von Signalen von der ersten Basisstation (10), einen Speicher (50), der Berechtigungscodes enthält, die wirksam sind, um eine Funktion an der ersten Basisstation (10) zu steuern, und Verarbeitungsmittel (44) einschließt, die so ausgebildet sind, daß sie, auf Empfang einer Aufforderung von der ersten Basisstation (10), einen Berechtigungscode von dem Speicher zur Übertragung zur ersten Basisstation (10) erhalten, daß auf Empfang eines Berechtigungscodes durch die erste Basisstation (10), wobei der Code als ein akzeptierbarer Berechtigungscode verifiziert wird, die erste Basisstation (10) durch passive Betätigung des elektronischen Schlüssels (14, 14') freigegeben wird, und daß der elektronische Schlüssel eine manuell betreibbare Betätigungsvorrichtung (54) einschließt, die an die Verarbeitungsmittel (44) gekoppelt und so ausgebildet ist, daß sie einen Berechtigungscode zur Übertragung zur ersten Basisstation (10) erzeugt, so daß auf Empfang eines derartigen Berechtigungscodes durch die erste Basisstation (10), wobei der Code als ein akzeptierbarer Berechtigungscode verifiziert wird, die erste Basisstation (10) durch aktive Betätigung des elektronischen Schlüssels (14, 14') freigegeben wird.

2. Ein System nach Anspruch 1,
dadurch gekennzeichnet,
daß der Transmitter (28) der ersten Basisstation (10) einen ersten Transmitter (28) darstellt und so ausgebildet ist, daß er die Anforderung eines Berechtigungscodes mittels eines Signals relativ kurzer Reichweite überträgt, und der Transmitter (48) des elektronischen Schlüssels (14, 14') einen zweiten Transmitter (48) darstellt und so ausgebildet ist, daß er einen Berechtigungscode mittels eines Signals relativ langer Reichweite überträgt, wodurch der elektronische Schlüssel (14, 14') die erste Basisstation (10) in einer größeren Entfernung davon freigeben kann, wenn er aktiv betätigt wird, als wenn er passiv betätigt wird.

3. Ein System nach Anspruch 2,
dadurch gekennzeichnet,
daß der erste Transmitter (28) so ausgebildet ist, daß er die Anforderung eines Berechtigungscodes mittels eines Niedrigfrequenzbandsignals überträgt, und der zweite Transmitter (48) so ausgebildet ist, daß er einen Berechtigungscode mittels eines Signals in dem VHF-Funkfrequenzband überträgt.

4. Ein System nach einem der vorhergehenden Ansprüche,
dadurch gekennzeichnet,
daß eine zweite Basisstation (22, 23) vorgesehen ist, die eine durch den elektronischen Schlüssel (14, 14') steuerbare Funktion einschließt, wobei die zweite Basisstation (22, 23) einen dritten Empfänger einschließt, der so ausgebildet ist, daß er ein codiertes Signal zur Steuerung der Funktion der zweiten Basisstation (22, 23) empfängt, und der elektronische Schlüssel (14, 14') zweite Betätigungsmittel (52) einschließt, die an die Verarbeitungsmittel (44) gekoppelt und so ausgebildet sind, daß sie ein codiertes Signal zur Übertragung zur zweiten Basisstation (22, 23) erzeugen.

5. Ein System nach Anspruch 4,
dadurch gekennzeichnet,
daß die erste Basisstation ein Fahrzeug (10) und die zweite Basisstation das Betriebsmittel (22) zum Betreiben einer Garagentür ist.

6. Ein System nach einem der vorhergehenden Ansprüche,
dadurch gekennzeichnet,
daß der Speicher (50) des elektronischen Schlüssels (14, 14') Hilfsdaten einschließt, die so ausgebildet sind, daß sie zu der oder jeder Basisstation (10, 22, 23) übertragen werden, wobei die oder jede Basisstation (10, 22, 23) so ausgebildet ist, daß sie die Hilfsdaten verarbeitet.

7. Ein System nach einem der vorhergehenden Ansprüche,
dadurch gekennzeichnet,
daß die oder jede Basisstation (10, 22, 23) so ausgebildet ist, daß sie Hilfsdaten zur Übertragung zum Speicher (50) des elektronischen Schlüssels (14, 14') zur Speicherung dadurch erzeugt.

8. Ein elektronischer Schlüssel zur Steuerung einer Funktion einer Basisstation durch Fernsteuerung mit einem Transmitter (48) zum Senden eines Berechtigungscodes zur ersten Basisstation (10),
dadurch **gekennzeichnet**,
daß der elektronische Schlüssel (14, 14') ferner umfaßt einen Speicher (50), der Berechtigungscodes enthält, die wirksam sind, um eine Funktion an einer Basisstation (10) zu steuern, Verarbeitungsmittel (44), die so ausgebildet sind, daß sie einen Berechtigungscode vom Speicher (50) erhalten, Befehlsmittel (38, 36, 52, 54), die in einem aktiven Modus und/oder einem passiven Modus betreibbar und so ausgebildet sind, daß sie ein Befehlssignal zu den Verarbeitungsmitteln (44) liefern, um die Verarbeitungsmittel (44) zu veranlassen, einen Berechtigungscode vom Speicher (50) zu erhalten, wobei die Befehlsmittel einen Empfänger (38) zum Empfangen von Signalen von einer Basisstation (10) einschließen und so ausgebildet sind im passiven Modus, daß sie ein Befehlssignal zu den Verarbeitungsmitteln (44) liefern, eine manuell betreibbare Betätigungsvorrichtung (52, 54), die so ausgebildet ist, daß sie ein Befehlssignal im aktiven Modus erzeugt, und einen Transmitter (48), der an die Verarbeitungsmittel (44) gekoppelt ist, um den erhaltenen Berechtigungscode zu einer Basisstation (10) zu senden.

9. Ein elektronischer Schlüssel nach Anspruch 8,
dadurch gekennzeichnet,
daß der Empfänger (38) so ausgebildet ist, daß er Magnetfeldsignale empfängt, und der Transmitter (48) so ausgebildet ist, daß er den erhaltenen Berechtigungscode mit einer Frequenz überträgt, die eine längere Reichweite als die Magnetfeldsignale aufweist, die so ausgebildet sind, daß sie durch den Empfänger (38) empfangen werden.

10. Ein elektronischer Schlüssel nach Anspruch 8 oder 9,
dadurch gekennzeichnet,
daß der Speicher (50) Hilfsdaten enthält, die so ausgebildet sind, daß sie übertragen werden zur Basisstation (10, 22, 23) mit dem Berechtigungscode.

11. Ein elektronischer Schlüssel nach Anspruch 8, 9 oder 10,
dadurch gekennzeichnet,
daß der elektronische Schlüssel so ausgebildet ist, daß er Hilfsdaten empfängt und speichert.

## Revendications

1. Système de commande d'une fonction d'une station de base par télécommande, comprenant une première station de base (10) conçue pour être activée par réception d'un code d'autorisation prédéterminé, et une clé électronique (14; 14'); dans lequel la première station de base (10) inclut un premier récepteur (32) et des moyens pour mémoire un code d'autorisation acceptable, et la clé électronique (14, 14') comprend un émetteur (48) destiné à envoyer un code d'autorisation à la première station de base (10),
caractérisé en ce que
la première station de base (10) comprend en outre des moyens d'autorisation (24) conçus pour demander à la clé électronique (14, 14') de transmettre un code d'autorisation, et un émetteur (28) destiné à transmettre une telle demande, en ce que la clé électronique (14, 14') comprend en outre un récepteur (38, 36) destiné à recevoir des signaux émanant de la première station de base (10), une mémoire (50) destinée à contenir des codes d'autorisation effectifs pour commander une fonction au niveau de la première station de base (10), et des moyens de traitement (44) adaptés pour obtenir, à réception d'une demande de la première station de base (10), un code d'autorisation depuis ladite mémoire destiné à être transmis à la première station de base (10), et en ce que, à réception d'un code d'autorisation par la première station de base (10), ce code ayant été vérifié comme étant un code d'autorisation acceptable, la première station de base (10) est activée par l'actionnement passif de la clé électronique (14, 14'), et en ce que la clé électronique comporte un actionneur (54) pouvant être commandé manuellement, couplé aux dits moyens de traitement (44) et adapté pour engendrer un code d'autorisation destiné à être transmis à la première station de base (10), de manière que, à réception d'un tel code d'autorisation par la première station de base (10), ce code ayant été vérifié comme étant un code d'autorisation acceptable, la pre mière station de base (10) soit activée via l'actionnement actif de la clé électronique (14, 14').

2. Système selon la revendication 1, caractérisé en ce que l'émetteur (28) de la première station de base (10) est un premier émetteur (28) et est adapté pour transmettre la demande d'un code d'autorisation via un signal de relativement courte portée, et le émetteur (48) de la clé électronique (14, 14') est un deuxième émetteur (48) et est adapté pour transmettre un code d'autorisation au moyen d'un signal de relativement longue portée, ce qui fait que la clé électronique (14, 14') peut, lorsqu'elle est actionnée de façon active, activer la première station de base (10) à une distance de celle-ci, qui est plus grande que lorsqu'elle est activée de façon passive.

3. Système selon la revendication 2, caractérisé en ce que le premier émetteur (28) est adapté pour transmettre la demande d'un code d'autorisation au moyen d'un signal de bande basse fréquence, et le deuxième émetteur (48) est adapté pour transmettre un code d'autorisation au moyen d'un signal situé dans la bande des fréquences radio VHF.

4. Système selon l'une quelconque des revendications précédentes, caractérisé en ce qu'une deuxième station de base (22, 23) est prévue, comportant une fonction pouvant être commandée par la clé électronique (14, 14'), la deuxième station de base (22, 23) comprenant un troisième récepteur adapté pour recevoir un signal codé permettant de commander la fonction de la deuxième station de base (22, 23), la clé électronique (14, 14') incluant des seconds moyens d'actionnement (52) reliés aux moyens de traitement (44) et adaptés pour engenfrer un signal codé destiné à être transmis à la deuxième station de base (22, 23).

5. Système selon la revendication 4, caractérisé en ce que la première station de base est un véhicule (10) et la deuxième station de base est le moyen d'actionnement (22) pour la commande d'une porte de garage.

6. Système selon l'une quelconque des revendications précédentes, caractérisé en ce que la mémoire (50) de la clé élec tronique (14, 14') contient des données auxiliaires adaptées pour être transmises à la ou à chaque station de base (10, 22, 23), la ou chaque station de base (10, 22, 23) étant adaptée pour traiter les données auxiliaires.

7. Système selon l'une quelconque des revendications précédentes, caractérisé en ce que la ou chaque station de base (10, 22, 23) est adaptée pour produire des données auxiliaires destinées à être transmises à la mémoire (50) de la clé électronique (14, 14') afin d'y être enregistrées.

8. Clé électronique permettant de commander une fonction d'une station de base par télécommande, comprenant un émetteur (48) destiné à transmettre un code d'autorisation à la première station de base (10),
caractérisée en ce que la clé électronique (14, 14') comprend en outre une mémoire (50) destinée à contenir des codes d'autorisation servant à commander une fonction au niveau d'une station de base (10), des moyens de traitement (44) adaptés pour obtenir de cette mémoire (50) un code d'autorisation, des moyens de commande (38, 36, 52, 54) pouvant fonctionner dans un mode actif et/ou dans un mode passif et adaptés pour fournir un signal de commande aux moyens de traitement (44), de manière à amener les moyens de traitement (44) à obtenir un code d'autorisation de la mémoire (50), les moyens de commande incluant un récepteur (38) destiné à recevoir des signaux depuis la station de base (10), et étant prévus, en mode passif, pour fournir un signal de commande aux dits moyens de traitement (44), un actionneur à commande manuelle (52, 54) conçu pour produire, en mode actif, un signal de commande, et un émetteur (48) relié aux moyens de traitement (44), destiné à transmettre le code d'autorisation obtenu à la station de base (10).

9. Clé électronique selon la revendication 8, caractérisée en ce que le récepteur (38) est adapté pour recevoir des signaux de champ magnétique, et que l'émetteur (48) est adapté pour transmettre le code d'autorisation obtenu, à une fréquence dont la portée est plus grande que celle des signaux de champ magnéti que adaptés pour être reçus par le récepteur (38).

10. Clé électronique selon la revendication 8 ou 9, caractérisée en ce que la mémoire (50) contient des données auxiliaires adaptées pour être transmises à la station de base (10, 22, 23) en même temps que le code d'autorisation.

11. Clé électronique selon la revendication 8, 9 ou 10, caractérisée en ce que la clé électronique est adaptée pour recevoir et pour enregistrer des données auxiliaires.
